# EUROPEAN PATENT SPECIFICATION

(11) **EP 3 475 004 B1**
(45) Date of publication and mention of the grant of the patent: **05.04.2023**
(21) Application number: 17819414.8
(22) Date of filing: 22.06.2017
(51) Int. Cl.: B09B 3/00, C22B 7/00, C08J 11/04, F26B 3/08, F26B 11/04, B29B 17/02, B08B 3/06

(54) **SYSTEM AND METHOD FOR SEPARATING METAL FROM PAINT WASTE**
SYSTEM UND VERFAHREN ZUR TRENNUNG VON METALL AUS LACKABFÄLLEN
SYSTÈME ET PROCÉDÉ DE SÉPARATION DU MÉTAL DES DÉCHETS DE PEINTURE

(30) Priority: 27.06.2016 FI 20165533
(43) Date of publication of application: 01.05.2019
(73) Proprietor: L&T Teollisuuspalvelut Oy, 00380 Helsinki (FI)
(72) Inventor: PAASIKIVI, Mikko, 20720 Turku (FI); NIKKARI, Ilkka, 21270 Nousiainen (FI)
(74) Representative: Heinonen & Co
(86) International application number: PCT/FI2017/050476
(87) International publication number: WO 2018/002431

(56) References cited:
- EP-A1- 0 480 508
- EP-A1- 1 547 984
- WO-A1-87/00259
- WO-A1-2010/004268
- CN-U- 203 462 106
- DE-A1- 4 340 427
- DE-C1- 19 512 550
- GB-A- 2 475 951
- JP-A- 2011 011 176
- KR-A- 20150 031 258
- KR-A- 20150 064 001
- US-A- 4 548 651

## Description

### TECHNICAL FIELD

The present invention relates to a system and method for separating metal from paint waste.

### BACKGROUND OF THE INVENTION

Metal paint cans are still widely used compared to plastic ones. However, currently, separating the metal from the paint waste is challenging. As the metal is often left more or less unseparated from the paint waste, the metal is reused to a modest, or even negligible, extent.

Still, in many places, the paint cans are only cleaned manually, by scraping the cans. This process does not clean the metal and, therefore, its reuse continues to be challenging. The paint waste is currently taken to a high-temperature incineration process, and, because there is no operable method available for separating the metal, the metal cans are usually taken to the same incineration process, along with the paint waste. It is possible to separate metal residues from the ash by screening but, after the incineration process, the recovery rate of metal is still low.

A few metal recycling systems and methods are known from the prior art. WO08010621 A1, for example, discloses a system and method for recycling metal cans. However, this solution utilizes magnetic conveyors and washing tanks containing solvents for separating the metal. The process is a multi-step, space-consuming and expensive process to be carried out for separating metal from paint waste.

DE4325104 A1 discloses another method of separating metal from paint waste. In this method, the paint cans are frozen down to -90 degrees Celsius and the metal is removed by impact on the paint cans. Thereafter, magnetic devices are used for separating the metal. This method is laborious and time-consuming, especially because the metal cans must first be frozen down to a low temperature.

US4548651 A and CN203462106 U disclose systems for separating metal from paint waste.

### SUMMARY OF THE INVENTION

The invention aims at alleviating the above-mentioned problems related to separating metal from paint waste. An objective of the invention is separate metal from paint waste in a way allowing the metal to be reused.

The objective of the invention is achieved by a system and method for separating metal from paint waste according to an aspect.

The system of the invention is characterized in what is set forth in the characterizing part of the independent claim 1.

The method of the invention is characterized in what is set forth in the characterizing part of the independent claim10.

Preferred embodiments of the invention are also described in the dependent claims.

According to an embodiment of the invention, the system comprises a number of consecutive rotating drums, the drums being separated from each other by partition walls, and, in these rotating drums, the crushed metal is arranged to move, from the preceding drum to the next drum, through an inlet provided in the partition walls. According to an embodiment of the invention, the partition walls are provided between the rotating drums, and, the partition walls are provided with feeding chutes for moving the crushed metal to the next drum. The partition walls may be integrated with the drum in order to cause the partition wall and the chute to rotate together with the drum. The feeding chutes may be fitted in the partition walls in such a way that, as the drum rotates, the chute receives metal so that the metal moves from the preceding drum to the next drum. The feeding chutes may be easily replaceable so that the amount of moving metal is easily adjusted. A wider chute moves a larger amount of metal from the preceding drum to the next drum at once.

According to an embodiment of the invention, the system comprises a rinsing phase for bringing a rinsing fluid into contact with the rotating drum, the rinsing phase being after the vapor phase.

According to an embodiment of the invention, the system comprises a drying phase for drying the metal being treated by the rotating drum, the drying phase being after the rinsing phase.

According to an embodiment of the invention, conveyor screws are provided on the bottom of the system to convey the separated paint away from the system. In some embodiments, the system comprises V-shaped bottom pools to collect the separated paint. The conveyor screws may be provided on the bottom of the pools for conveying the paint away from the system.

According to an embodiment of the invention, the vapor phase comprises at least three drums one after another. In some embodiments, a single drum or two drums may be used. In some embodiments, more than three, such as four or five, drums may be used one after another. According to the invention, nozzles direct the vapor close to the surface of the drum so that the vapor is directed to the metal being treated.

According to an embodiment of the invention, the method comprises a step of rinsing the metal.

According to an embodiment of the invention, the method comprises a step of drying the metal.

According to an embodiment of the invention, the method comprises a step of conveying away and/or recovering the separated paint.

The utility of the system and method according to the invention is based on a number of issues. The separated metal may be highly free from the separated paint waste. The separated metal may be of high quality, and, therefore, the reuse of the metal may be possible. The reuse of metal may increase considerably with the present invention. The present invention may provide a cost-effective system and method for separating metal from paint waste. The present invention may also provide a compact separation process which may be implemented, when needed, in various locations. The compact structure of the present invention may allow it to be easily moved from place to place. When placed in a sea container, the system may be easily transferred/moved by a suitable crane and/or transport vehicle.

In this application, the expression "a number of" refers to any positive integer starting from one (1), such as one, two or three.

The expression "a plurality of", in turn, refers to any integer starting from two (2).

In this application, the expression "paint waste" refers to waste containing at least paint and waste metal.

### BRIEF DESCRIPTION OF THE FIGURES

In the following, preferred embodiments of the invention will be described in more detail with reference to the accompanying figures wherein
Figure 1 is an exemplary view of a system according to an embodiment of the present invention,
Figure 2 is an exemplary view of rotating drums according to an embodiment of the present invention,
Figures 3a to 3c are exemplary views of a partition wall and a feeding chute according to an embodiment of the present invention,
Figure 4 is an exemplary view of an inlet formed by a drum and a partition wall, according to an embodiment of the present invention,
Figure 5 is an exemplary view of a system according to another embodiment of the present invention, and
Figure 6 is a flow chart of a method according to an embodiment of the present invention.

### MORE DETAILED DESCRIPTION OF THE FIGURES

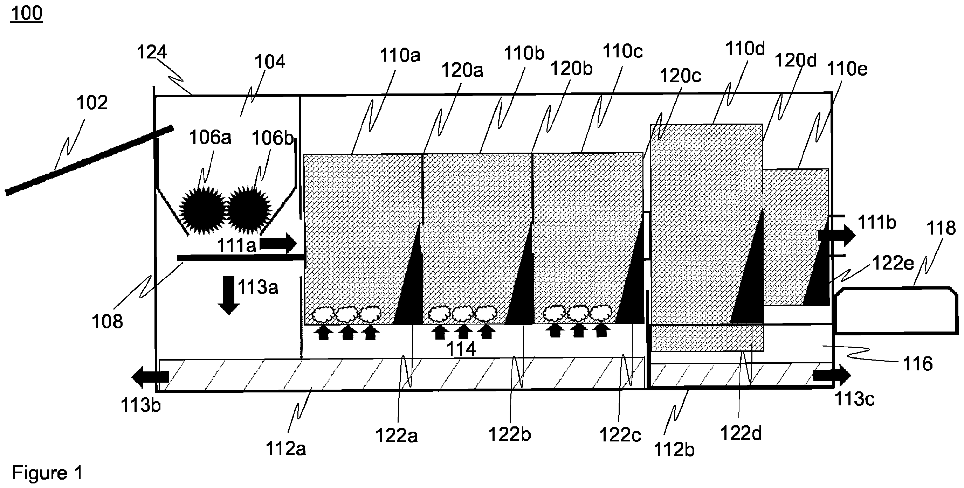

Figure 1 shows a system 100 for separating metal from paint waste according to an embodiment of the present invention. The system comprises a first conveyor 102 for conveying the material to be treated, such as metal paint cans, to a crusher 104. For instance, the crusher 104 may comprise two toothed crushers 106a, 106b for crushing the material to be treated.

A second conveyor 108 is provided below the crusher for moving the material to rotating drums 110a to 110e. The moving direction of the material is designated by an arrow 111a. The conveyor 108 is perforated in order to allow the paint separated from the material being treated to flow down to the bottom of the system. The flow of the separated paint down to the bottom of the system is designated by an arrow 113a. Conveyor screws 112a, 112b are provided on the bottom for moving the separated paint to the ends of the system. The first conveyor screw 112a and the second conveyor screw 112b are adapted to convey the separated paint to the front end of the system (arrow 113b) and to the rear end of the system (arrow 113b), respectively. Collection bins for the paint can be provided at the ends of the screw conveyors, for example.

The three first rotating drums 110a, 110b, 110c of the system 100 comprise a vapor phase 114. Preferably, vapor is supplied to the surfaces of the rotating drums so that the material rotating in the drums is exposed to the vapor. Preferably, the vapor may be water vapor, for example. For example, small nozzles may be used for supplying the vapor, allowing the vapor to be directed close to the surfaces of the drums. The vapor may be generated by a vapor generator, for example. In some embodiments, vapor generators of approximately 10 to 20 kW may be used. In some embodiments, more effective vapor generators, such as 200 kW vapor generators, may be used. A more effective vapor generator allows the metal being treated to be freed from paint faster/more effectively. Lighter vapor generators give a good outcome as well, when directing the vapor to the metal being treated. The rotating drums may comprise apertures/holes, through which the vapor acts on the metal being treated. The paint that comes off the metal being treated may also flow through the apertures/holes out of the drums. The diameter of the holes may be 15 mm, 20 mm or 25 mm, for example.

The fourth rotating drum 110d of the system 100 comprises a rinsing step. A rinsing pool 116 is arranged below the rotating drum 110d so that the fluid of the rinsing pool is in contact with the drum. Water, oil in water or alkaline water may be used as the washing fluid, for example. The fifth rotating drum 110e of the system 100 comprises a drying step. The drying step may merely comprise the rotating drum 110e, or, air may be fed/blown into the drum, for example. The air may be supplied by a suitable fan and/or blower, for example. After the drying step, the treat-ed/washed metal is moved onto a collection platform 118. The moving direction of the material being treated is designated by an arrow 111b.

The rotating drums 110a to 110e preferably form a single continuous unit divided into sections by the partition walls 120a to 120d. The partition walls 120a to 120d and the feeding chutes 122a to 122d are provided between the rotating drums 110a to 110e for moving the material from the preceding drum to the next drum. The last drum 110e is also provided with a feeding chute 122e for moving the metal to the next step. The feeding chutes can be easily replaceable in order to allow the rate at which the material being treated is moved from one step another to be adjusted. Wider/larger chutes move a larger amount of material at a time.

The system 100 can be placed in a sea container 124, for example. The sea container 124 can be an ISO-standard container, such as a 20 foot sea container. In some embodiments, the conveyor 108 and the collection platform 118 are located outside the container.

The diameter of the rotating drums 110a to 110e of the vapor step is preferably 1 to 2 m, more preferably 1.2 to 1.8 m and most preferably 1.4 to 1.6 m. The diameter of the drum 110d of the rinsing step is preferably 1.5 to 2.5 m, more preferably 1.7 to 2.3 m and most preferably 1.9 to 2.1 m. The diameter of the drum 110e of the drying step is preferably 0.8 to 1.8 m, more preferably 1 to 1.6 m and most preferably 1.2 to 1.4 m. The combined width of the rotating drums 110a to 110e is preferably 3.4 to 5.8 m, more preferably 3.8 to 5.4 m and most preferably 4.2 to 5 m.

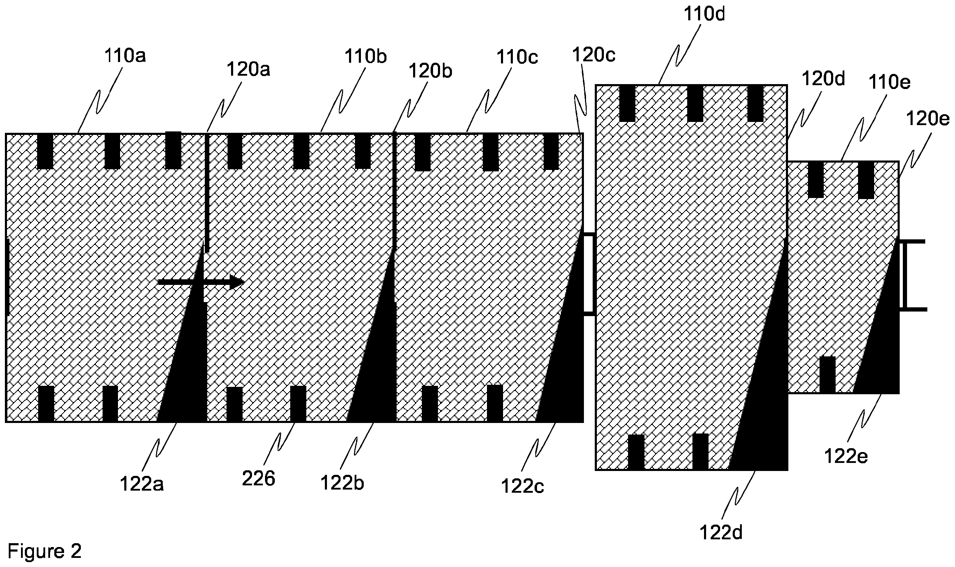

Referring to Figure 2, the rotating drums 110a to 110e may comprise tooth-like tumbling discs 226 for mixing the material being treated in order to prevent the material from packing together. The tumbling discs may run around the entire periphery of the drum or consist of tumbling disc sections on the periphery of the drum. The tumbling discs may also comprise indentations, for example.

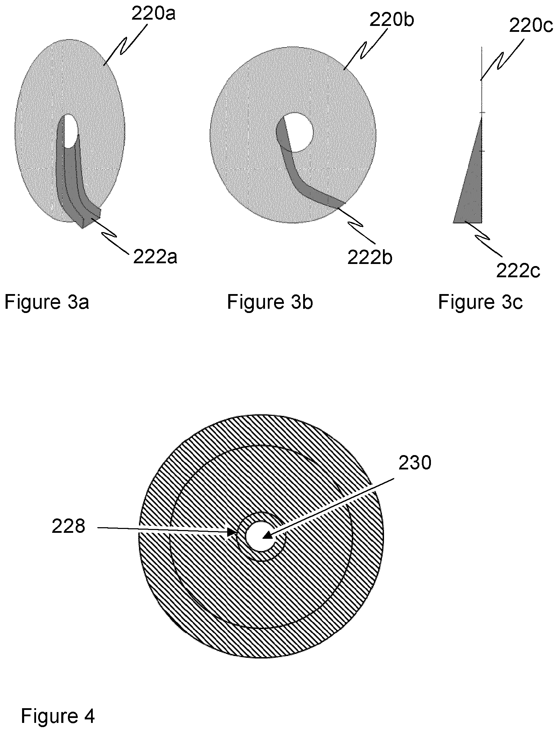

Figures 3a to 3c show the partition walls 220a to 220c and the feeding chutes 222a to 222c thereof. Figure 3a is an oblique rear view of the partition wall 220a and the feeding chute 222a. Figure 3b is a front view of the partition wall 220b and the feeding chute 222b. Figure 3c, in turn, is a lateral view of the partition wall 220c and the feeding chute 222c. The chute picks up the metal being treated while the partition wall and the chute rotate along with the drum. The feeding chute moves the metal to next drum/step through an inlet.

Figure 4 shows an inlet formed by a drum and a partition wall. As an example, the drum inlet 228 can be slightly bigger than the partition wall inlet 230.

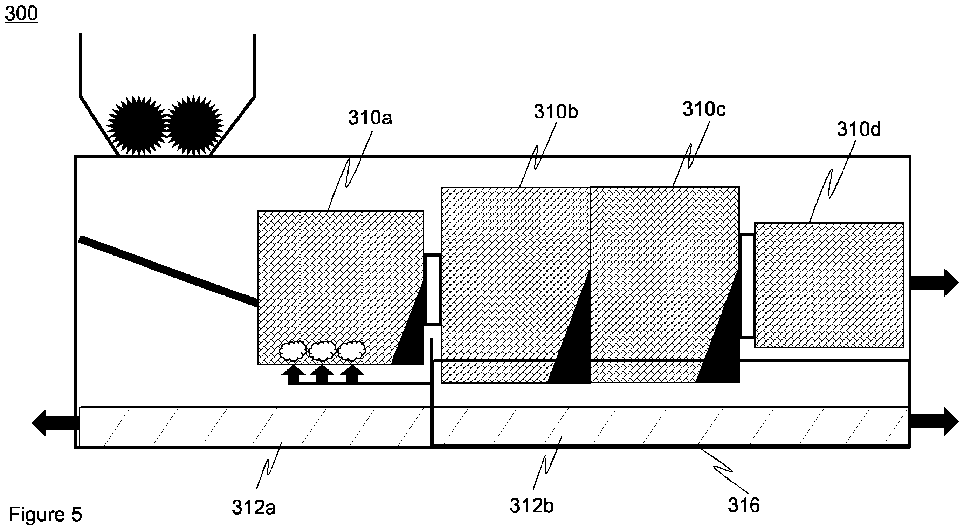

Figure 5 shows a system 300 according to another embodiment of the present invention, comprising four rotating drums 310a to 310d. The first drum 310a comprises a vapor phase. The drum 310a is provided with holes/apertures through which the vapor can act on the metal being treated and through which the separated paint can flow out of the drum. Preferably, the vapor is directed close to the surface of the drum in order to subject the metal being treated to the vapor through the holes/apertures. The second and third drums 310b, 310c comprise a rinsing step, with a rinsing pool 316 below the drums, the drums being in contact with the rinsing fluid. The drums 310a, 310b are provided with holes/apertures through which the rinsing fluid can act on the metal being treated and through which apertures/holes the paint can flow out of the drums. The fourth drum 310d comprises a drying phase in which the material being treated is dried by the rotational movement of the drum. The fourth drum is also provided with apertures/holes allowing the fluid to flow out of the drum. Besides, the drying phase may comprise an air blow into the drum and/or after the drum. Two screw conveyors 312a, 312b are arranged on the bottom of the system 300 for conveying the paint waste away from the system. The paint waste is deposited on the bottom of the rinsing pool to be conveyed away therefrom by the second screw conveyor 312b.

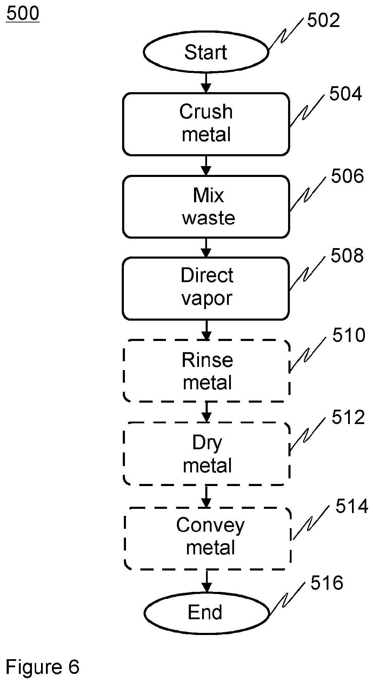

Figure 6 is a flow chart of a method 500 of separating metal from paint waste according to an embodiment of the invention.

In step 502, all of the preparatory measures of the method are carried out. This step may comprise assembling and installing the system for operation, for example. This step may also comprise placing the system in a sea container, for example.

In step 504, the metal to be treated is crushed. This step may comprise supplying paint cans to the crusher, for example.

In step 506, the waste being treated is mixed in the drums. This step may comprise conveying the metal from the crusher to the rotating drums by a conveyor, for example.

In step 508, vapor is directed to the metal being treated. This step may comprise generating vapor, such as water vapor, by a vapor generator. The vapor can be directed to the surfaces of the rotating drums by nozzles, for example, to allow the vapor act on the metal being treated through apertures provided in the drums.

In step 510, the metal is rinsed. This step may comprise a washing pool, for example, the washing pool being in contact with the rotating drum in order to subject the metal being treated to a rinsing fluid.

In step 512, the metal is dried. This step may comprise a rotating drum that dries the metal. Besides, this step may comprise supplying air to the rotating drum, for example. After step 512, the treated metal can be collected onto a collection platform, for example, to be passed on therefrom.

In step 514, the paint is conveyed further on and/or recovered. This step may comprise conveying the separated paint away from the system and into collection bins, by the screw conveyors.

Step 516 illustrates the end of the present method.

Steps 510, 512 and 514 are denoted by dashed lines because these steps are not necessarily carried out in each embodiment. In some embodiments, after the vapor step, that is, step 508, the metal is already completely separated from the paint waste. In some embodiments, however, the metal can also be rinsed (step 510) and/or dried (step 512). The separated paint can be conveyed by screw conveyors and/or collected into collection bins, for example (step 514). Alternatively, in some embodiments, the paint can be directly collected into bottom pools, for example.

## Claims

1. A system (100) for separating metal from paint waste, comprising:
- a crusher (104) for crushing the metal, and
- at least one rotating drum (110a-110e) for mixing the crushed metal,
**characterized in that** the system comprises a vapor phase (114) in which vapor is arranged in at least one rotating drum so that the metal being treated is exposed to the vapor, wherein the drum comprises apertures/holes, and vapor nozzles, wherein the vapor nozzles are arranged close to the surface of the rotating drum such that the vapor is directed to the metal being treated through the apertures/holes.

2. The system (100) according to any of the preceding claims, **characterized in that** the system comprises a number of consecutive rotating drums (110a-110e), the drums being separated from each other by partition walls (120a-120d), and the partition walls being provided with integrated feeding chutes (122a-122d) for moving the crushed metal to the next drum through an inlet provided in the partition walls.

3. The system (100) according to any of the preceding claims, **characterized in that** the system comprises a rinsing phase in which a rinsing fluid is arranged in contact with the rotating drum (110d).

4. The system (100) according to claim 3, **characterized in that** a rinsing pool is provided below at least one rotating drum, the drum being in contact with the rinsing fluid.

5. The system (100) according to any of the preceding claims, **characterized in that** the system comprises a drying phase in which the metal being treated is dried by a rotating drum (110e), the drying phase being after the vapor phase (114) and/or the rinsing phase.

6. The system (100) according to any of the preceding claims, **characterized in that** at least one conveyor screw (112a, 112b) is arranged on the bottom of the system for conveying the separated paint away from the system.

7. The system (100) according to any of the preceding claims, **characterized in that** the vapor phase (114) comprises at least three consecutive drums (110a-110c).

8. The system (100) according to any of the preceding claims, **characterized in that** the system is arranged in a sea container (124) so that the system is movable.

9. The system (100) according to any of the preceding claims, **characterized in that** tumbling discs (226) are provided on the periphery of the drums for mixing the crushed waste.

10. A method (500) of separating metal from paint waste, **comprising** in the method the steps of
- crushing metal (504), and
- mixing waste in drums (506),
**characterized in that** the method comprises:
- rotating a drum that comprises apertures/holes, and vapor nozzles, and
- directing vapor (508), by vapor nozzles close to the surface of the rotating drum, to the metal being treated through the apertures/holes.

11. The method (500) according to claim 10, **characterized in that** the method comprises a step of rinsing (510) the metal.

12. The method (500) according to claim 10 or 11, **characterized in that** the method comprises a step of drying (512) the metal.

13. The method (500) according to any of claims 10 to 12, **characterized in that** the method comprises a step of conveying away the separated paint and/ or recovering (514) the separated paint.

## Patentansprüche

1. System (100) zum Abscheiden von Metall aus Farbabfällen, umfassend:
- einen Brecher (104) zum Zerkleinern des Metalls, und
- mindestens eine rotierende Trommel (110a-110e) zum Mischen des zerkleinerten Metalls,
**dadurch gekennzeichnet, dass** das System eine Dampfphase (114) aufweist, in der Dampf in mindestens einer rotierenden Trommel so verteilt ist, dass das zu behandelnde Metall dem Dampf ausgesetzt wird, wobei
die Trommel umfasst
Öffnungen/Löcher und Dampfdüsen, wobei die Dampfdüsen nahe der Oberfläche der rotierenden Trommel angeordnet sind, sodass der Dampf durch die Öffnungen/Löcher auf das zu behandelnde Metall gerichtet wird.

2. System (100) nach einem der vorhergehenden Ansprüche, **dadurch gekennzeichnet, dass** das System eine Anzahl von aufeinanderfolgenden rotierenden Trommeln (110a-110e) umfasst, wobei die Trommeln durch Trennwände (120a-120d) voneinander getrennt sind und die Trennwände mit integrierten Zuführungsrutschen (122a-122d) versehen sind, um das zerkleinerte Metall durch einen in den Trennwänden vorgesehenen Einlass zur nächsten Trommel zu befördern.

3. System (100) nach einem der vorhergehenden Ansprüche, **dadurch gekennzeichnet, dass** das System eine Spülphase aufweist, in der eine Spülflüssigkeit in Kontakt mit der rotierenden Trommel (110d) angeordnet ist.

4. System (100) nach Anspruch 3, **dadurch gekennzeichnet, dass** unter mindestens einer rotierenden Trommel ein Spülbecken vorgesehen ist, wobei die Trommel in Kontakt mit der Spülflüssigkeit steht.

5. System (100) nach einem der vorhergehenden Ansprüche, **dadurch gekennzeichnet, dass** das System eine Trocknungsphase aufweist, in der das behandelte Metall durch eine rotierende Trommel (110e) getrocknet wird, wobei die Trocknungsphase nach der Dampfphase (114) und/oder der Spülphase erfolgt.

6. System (100) nach einem der vorhergehenden Ansprüche, **dadurch gekennzeichnet, dass** mindestens eine Förderschnecke (112a, 112b) am Boden des Systems angeordnet ist, um die abgeschiedene Farbe aus dem System zu befördern.

7. System (100) nach einem der vorhergehenden Ansprüche, **dadurch gekennzeichnet, dass** die Dampfphase (114) mindestens drei aufeinanderfolgende Trommeln (110a-110c) umfasst.

8. System (100) nach einem der vorhergehenden Ansprüche, **dadurch gekennzeichnet, dass** das System in einem Schiffscontainer (124) so angeordnet ist, dass das System beweglich ist.

9. System (100) nach einem der vorhergehenden Ansprüche, **dadurch gekennzeichnet, dass** am Umfang der Trommeln Taumelscheiben (226) zum Mischen des zerkleinerten Abfalls vorgesehen sind.

10. Verfahren (500) zur Abtrennung von Metall aus Farbabfällen, wobei das Verfahren die folgenden Schritte **umfasst**
- Zerkleinern von Metall (504), und
- Mischen von Abfällen in Trommeln (506),
**dadurch gekennzeichnet, dass** das Verfahren umfasst:
- Rotation einer Trommel, die Öffnungen/Löcher und Dampfdüsen aufweist, und
- Lenken von Dampf (508) durch Dampfdüsen nahe der Oberfläche der rotierenden Trommel auf das zu behandelnde Metall durch die Öffnungen/Löcher.

11. Verfahren (500) nach Anspruch 10, **dadurch gekennzeichnet, dass** das Verfahren einen Schritt des Abspülens (510) des Metalls umfasst.

12. Verfahren (500) nach Anspruch 10 oder 11, **dadurch gekennzeichnet, dass** das Verfahren einen Schritt des Trocknens (512) des Metalls umfasst.

13. Verfahren (500) nach einem der Ansprüche 10 bis 12, **dadurch gekennzeichnet, dass** das Verfahren einen Schritt des Abtransports der abgeschiedenen Farbe und/oder der Rückgewinnung (514) der abgeschiedenen Farbe umfasst.

## Revendications

1. Système (100) permettant de séparer le métal des déchets de peinture, comprenant :
- un concasseur (104) permettant de broyer le métal, et
- au moins un tambour rotatif (110a - 110e) permettant de mélanger le métal broyé,
**caractérisé en ce que** le système comprend une phase vapeur (114) dans laquelle de la vapeur est disposée dans au moins un tambour rotatif de telle sorte que le métal étant traité est exposé à de la vapeur, dans lequel le tambour comprend des ouvertures/trous, et des buses de vapeur, dans lequel les buses de vapeur sont disposées à proximité de la surface du tambour rotatif de telle sorte que de la vapeur est dirigée sur le métal étant traité par l'intermédiaire des ouvertures/trous.

2. Système (100) selon l'une quelconque des revendications précédentes, **caractérisé en ce que** le système comprend un certain nombre de tambours rotatifs consécutifs (110a - 110e), les tambours étant séparés les uns des autres au moyen de parois de séparation (120a - 120d), et les parois de séparation étant munies de goulottes d'alimentation intégrées (122a-122d) permettant de déplacer le métal broyé vers le tambour suivant par l'intermédiaire d'une entrée prévue dans les parois de séparation.

3. Système (100) selon l'une quelconque des revendications précédentes, **caractérisé en ce que** le système comprend une phase de rinçage dans laquelle un fluide de rinçage est disposé en contact avec le tambour rotatif (110d).

4. Système (100) selon la revendication 3, **caractérisé en ce qu'**un bassin de rinçage est prévu sous au moins un tambour rotatif, le tambour étant en contact avec le fluide de rinçage.

5. Système (100) selon l'une quelconque des revendications précédentes, **caractérisé en ce que** le système comprend une phase de séchage dans laquelle le métal étant traité est séché au moyen d'un tambour rotatif (110e), la phase de séchage se trouvant après la phase vapeur (114) et/ou la phase de rinçage.

6. Système (100) selon l'une quelconque des revendications précédentes, **caractérisé en ce qu'**au moins une vis de transport (112a, 112b) est disposée au fond du système pour transporter la peinture séparée hors du système.

7. Système (100) selon l'une quelconque des revendications précédentes, **caractérisé en ce que** la phase vapeur (114) comprend au moins trois tambours consécutifs (110a - 110c).

8. Système (100) selon l'une quelconque des revendications précédentes, **caractérisé en ce que** le système est disposé dans un conteneur maritime (124) de telle sorte que le système est mobile.

9. Système (100) selon l'une quelconque des revendications précédentes, **caractérisé en ce que** des disques de culbuteur (226) sont montés à la périphérie des tambours pour mélanger les déchets broyés.

10. Procédé (500) permettant de séparer un métal des déchets de peinture, comprenant dans le procédé les étapes consistant à
- broyer un métal (504), et
- mélanger des déchets dans des tambours (506),
**caractérisé en ce que** le procédé consiste à :
- mettre en rotation un tambour qui comprend des ouvertures/trous, et des buses de vapeur, et
- diriger de la vapeur (508), au moyen de buses de vapeur situées à proximité de la surface du tambour rotatif, vers le métal étant traité par l'intermédiaire des ouvertures/trous.

11. Procédé (500) selon la revendication 10, **caractérisé en ce que** le procédé comprend une étape de rinçage (510) du métal.

12. Procédé (500) selon la revendication 10 pour la revendication 11, **caractérisé en ce que** le procédé comprend une étape de séchage (512) du métal.

13. Procédé (500) selon l'une quelconque des revendications 10 à 12, **caractérisé en ce que** le procédé comprend une étape d'évacuation de la peinture séparée et/ou de récupération (514) de la peinture séparée.
